# EUROPÄISCHE PATENTSCHRIFT

(11) **EP 1 494 882 B1**
(45) Veröffentlichungstag und Bekanntmachung des Hinweises auf die Patenterteilung: **10.06.2009**
(21) Anmeldenummer: 03725045.3
(22) Anmeldetag: 16.04.2003
(51) Int. Cl.: B60J 5/04, B29C 44/12, B29C 45/14

(54) **FAHRZEUGTÜR UND VERFAHREN ZU DEREN HERSTELLUNG**
VEHICLE DOOR AND METHOD FOR THE PRODUCTION THEREOF
PORTIERE DE VEHICULE ET PROCEDE PERMETTANT DE LA PRODUIRE

(30) Priorität: 16.04.2002 DE 10217831
(43) Veröffentlichungstag der Anmeldung: 12.01.2005
(73) Patentinhaber: Faurecia Innenraum Systeme GmbH, 76767 Hagenbach (DE)
(72) Erfinder: ECKHARDT, Bernhard, 35578 Wetzlar (DE); KÖLLNER, Harald, 63674 Altenstadt (DE); SCHWARZ, Werner, 76865 Insheim (DE); STOOF, Freddy, F-68180 Hornbourg-Wihr-en-Pleine (FR); RAHMSTORF, Peter, F-38380 Saint Laurent du Pont (FR); BONHOFF, Norbert, 46325 Borgen (DE); RÜSCHE, Heinz-Josef, 57489 Drolshagen-Bleche (DE); BERGERET, Wilfrid, F-90500 Beaucourt (FR)
(74) Vertreter: Pfenning, Meinig & Partner GbR
(86) Internationale Anmeldenummer: PCT/EP2003/003967
(87) Internationale Veröffentlichungsnummer: WO 2003/086795

(56) Entgegenhaltungen:
- DE-A- 3 119 701
- DE-A- 19 937 000
- FR-A- 2 813 242
- US-A1- 2001 038 228

## Beschreibung

Die vorliegende Erfindung betrifft ein Verfahren zur Herstellung einer Fahrzeugfür, gemäß dem oberbegriff des Anspruchs 1, sowie eine entsprechende Fahrzeugtür. Es sind Fahrzeugtüren bekannt, welche einen mit einer zentralen Öffnung versehenen Öffnungen Tragrahmen aufweisen, der mit einer Karosseriestruktur des Fahrzeugs (bei herkömmlichen Kfz-Seitentüren über ein Gelenk, bei Kleinbussen über Schienen) beweglich verbunden ist. Eine solche Tür wird z.B. in der Deutschen Patentanmeldung DE 101 26 250 beschrieben.

Nachteilig an einer solchen bekannten Tür mit einem Tragrahmen ist es, daß einzelne Bauteile z.B. zur Fixierung des Fensterhebermechanismusses bzw. zur Befestigung von Lautsprechern, Türverriegelungselementen etc. an dem Tragrahmen mit hohem Aufwand montiert werden müssen. Zudem ist es nachteilig, daß innerhalb des Tragrahmens, welcher üblicherweise nach innen hin von einer Türinnenverkleidung und nach außen hin von einer Außenbeplankung abgeschlossen wird, keine definierte Trennung des Naß/Trockenbereiches gegeben ist, so daß bei einer in der Tür vorgesehenen bewegliche Fensterscheibe unter Umständen Feuchtigkeitseintritt in sensible Bauteile wie z.B. Lautsprecher möglich ist.

Die gattungsbildende DE 199 37 000 A1 betrifft ein Trägerelement zur Aufnahme von Funktionseinheiten einer Kraftfahrzeugtür sowie ein Verfahren zu dessen Herstellung. Das Trägerelement ist zur Aufnahme von Funktionseinheiten einer Kraftfahrzeugtür gestaltet und mit einem tragenden Teil der Kraftfahrzeugtür verbindbar, das Trägerelement besteht zumindest teilweise aus einem Schaumstoff. Die Trägerplatte wird nicht durch Ausformung einer aushärtbaren Masse direkt an der entsprechenden Öffnung der Tür gebildet.

Die DE 31 19 701 A1 betrifft eine Verstellvorrichtung für eine versenkbare rahmenlose Fahrzeugfensterscheibe. Diese Verstellvorrichtung weist eine innerhalb der zugeordneten Fahrzeugwand verdeckt angeordnete vertikale oder im Wesentlichen vertikale Schienenführung auf, durch die eine Fahrzeugfensterscheibe in jeder ihrer Positionen gehalten und - während der Verstellbewegung - geführt ist.

Der vorliegenden Erfindung liegt daher die Aufgabe zugrunde, eine Fahrzeugtür sowie ein Verfahren zu deren Herstellung bereitzustellen, wobei die Herstellungskosten gering sind und zur Sicherstellung der Langzeitqualität eine definierte Trennung von Naß- und Trockenbereichen im Türinnenraum gegeben ist.

Diese Aufgabe wird durch die Gegenstände der unabhängigen Patentansprüche gelöst.

Dadurch, daß bei einem Verfahren zur Herstellung einer Kraftfahrzeugtür, welche einen mit einer Öffnung versehenen Tragrahmen aufweist, der mit einer Karosseriestruktur des Fahrzeugs beweglich verbunden ist, die Öffnung durch Ausformung mit einer aushärtbaren Masse unter Bildung einer Tragplatte zur Aufnahme von Elementen wie Fensterhebern, Lautsprechern oder dergleichen im Wesentlichen feuchtigkeitsdicht verschlossen wird, wobei mindestens eine Führungsschiene zur Führung einer gegenüber dem Tragrahmen verschieblichen Fensterscheibe zur Aufnahme einer Seitenkante der Fensterscheibe in der Tragplatte vorgesehen ist, müssen die zusätzlichen Elemente nicht mehr aufwendig direkt am Tragrahmen befestigt werden. Stattdessen ist praktisch die gesamte Fläche der Öffnung nutzbar. Außerdem ist eine klare Trennung von Innen- und Außenraum möglich, da die zentrale Öffnung durch die Tragplatte verschließbar ist. Hierdurch wird zum einen der Flüssigkeitsdurchtritt begrenzt, außerdem wird der Fahrkomfort erhöht (durch eine Geräuschdämmung infolge der zusätzlichen Lage) sowie die Fahrzeugsicherheit erhöht (da die Tragplatte auch bei einem Seitenaufprall energieabsorbierend wirkt). Besonders vorteilhaft ist, daß im Befestigungsbereich von Tragplatte und Tragrahmen eine zusätzliche Dichtung in der Regel entfallen kann, da bei üblichen Ausformverfahren eine flüssigkeitsdichte Verbindung hergestellt wird.

Diese Konstruktion bietet sich insbesondere für Türen mit einer "Rahmenkonstruktion" an. Diese Rahmenkonstruktionen sind insbesondere bei Leichtbaufahrzeugen und auch bei kostengünstig gefertigten Kleinwagen üblich. Vorteile der Rahmenkonstruktion liegen in dem einfachen Aufbau und der besonders guten Leichtbauoption. So ist es z.B. möglich, einen entsprechenden Rahmenaufbau durch ineinander gesteckte Metallprofile zu erreichen. Der Unterschied zwischen diesen Rahmenkonstruktionen und üblichen PKW-Türen, welche aus mehrlagigen Blechen aufgebaut sind, liegt insbesondere darin, dass aufgrund der erhöhten Festigkeit des Randes der Rahmenkonstruktion in der Regel lediglich eine (flächenmäßig sehr große) Öffnung vorgesehen ist, welche vorzugsweise von der Tragplatte feuchtigkeitsdicht zu verschließen ist. Hierbei ist in der Öffnung vorzugsweise am inneren Rand ein umlaufender Flansch vorzusehen, welcher vorzugsweise beidseitig umspritzt wird, um einerseits einen besonders festen Halt zur Tragplatte zu erreichen und außerdem einen Feuchtigkeitsdurchtritt unmöglich zu machen.

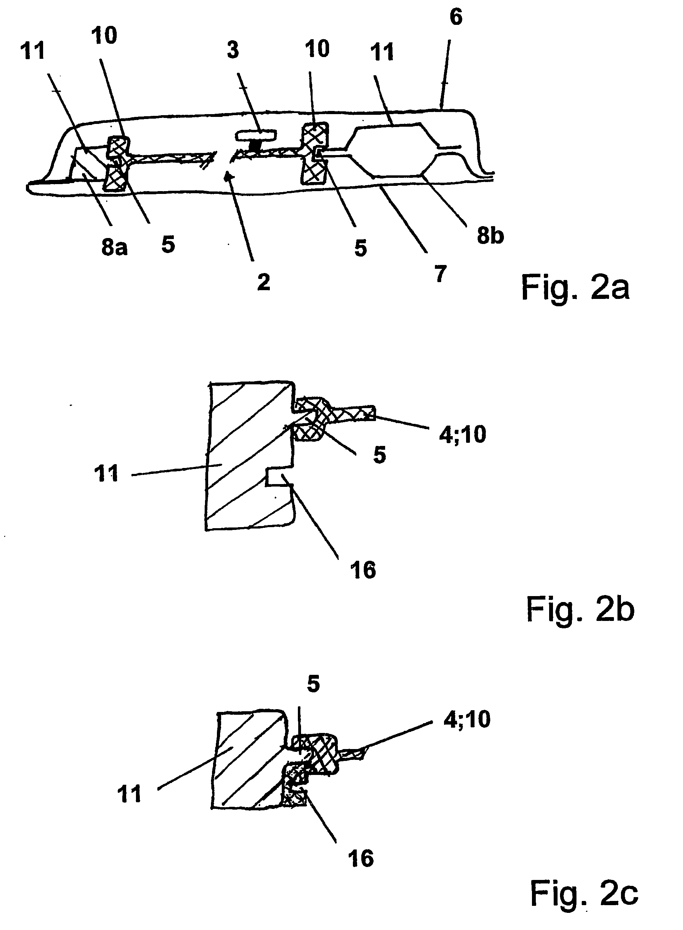

Es ist für die Erfindung ganz besonders wesentlich, dass Fensterführungsschienen zur seitlichen Führung praktisch mit eingespritzt werden (siehe insbesondere Fig. 2c weiter unten). Hierdurch wird es möglich, die Seitenkanten einer Fensterscheibe zu erfassen. Dadurch, dass diese seitlichen Schienen eine besonders gute Führung ermöglichen, sind besonders gut geführte Scheiben auch bei Entfall eines oberen Fensterrahmens (wie dies z.B. Coupés oft der Fall ist) möglich. Es bietet sich insbesondere an, zusätzlich in die mit eingespritzte seitliche Fensterführungsschiene "U"-förmige Einsätze aus einem sehr glatten Material vorzusehen, um ein möglichst kräftearmes Verschieben der Fensterscheibe zu erreichen.

Das Integrieren der Fensterführungsschiene hat mehrere Vorteile. Es ist gegenüber seitlichen Fensterführungsschienen, welche gesondert angeschraubt werden, eine Verkürzung der Toleranzkette festzustellen, da die Fensterführungsschiene direkt im Umspritzprozess an den Rahmen angekoppelt wird und daher keine zusätzlichen späteren Fertigungstoleranzen anfallen.

Insgesamt ist also festzustellen, dass mit dem erfindungsgemäßen Tragrahmen, welcher dem Verfahren nach Patentanspruch 1 hergestellt wird, eine Kraftfahrzeugtür erhalten wird, welche sehr schnell und kostengünstig herzustellen ist, da sogar die Fensterführungssysteme vollends in die Tragplatte eingearbeitet werden und die übrigen Komponenten, wie etwa Fensterheberantrieb, Lautsprecher etc. in die Tragplatte integriert werden können. Die äußeren bzw. inneren Beplankungen dienen demnach lediglich zur späteren Verzierung bzw. weiteren Schutz der Tür. Es ist selbstverständlich möglich, zur weiteren Erhöhung der Stabilität noch einen späteren Querträger einzusetzen, welcher vorzugsweise nach Durchführung des Umspritzprozesses eingebracht wird.

Vorteilhafte Weiterbildungen der vorliegenden Erfindung werden in den abhängigen Ansprüchen beschrieben.

Eine vorteilhafte Weiterbildung sieht vor, dass lediglich eine einzige Öffnung in dem Tragrahmen vorgesehen ist, welche von der Tragplatte verschlossen wird. Diese ist gewöhnlich unterhalb der Fensterbrüstung zu finden, die weitere Begrenzung findet durch einen vorderen und hinteren Holm statt, welcher bei einer Kraftfahrzeugvordertür an die A- bzw. B-Säule anschließt und durch einen unteren Verbindungssteg zwischen diesen beiden seitlichen Holmen.

Eine weitere vorteilhafte Weiterbildung sieht vor, dass die Fläche der Öffnung im Verhältnis zur Fläche der von der äußeren Kontur des Tragrahmens eingeschlossenen Fläche mehr als 0,4, vorzugsweise mehr als 0,5 beträgt. Durch dieses Verhältnis wird klar, dass bei der vorliegenden Tür, anders als bei eingespritzten kleinen Überbrückungen, die gesamte Türöffnung durch eine Tragplatte überbrückt wird. Dies kommt auch dadurch zum Ausdruck, dass die Tragplatte seitlich Führungsschienen zum Umfassen einer Fensterscheibe aufweist.

Eine vorteilhafte Weiterbildung sieht vor, daß das Ausformen durch Einspritzen einer thermo- oder duroplastischen Kunststoffmasse geschieht. Hierzu sind übliche Spritzgußverfahren für Kunststoffformteile anwendbar, so daß praktisch beliebige Formen für die Tragplatte und deren Topographie zur Befestigung von Elementen wie Fensterhebern, Lautsprechern etc. realisierbar sind. Eine besonders vorteilhafte Weiterbildung sieht hierbei vor, daß als aushärtbare Masse PPLGF (Polypropylenlangglasfaser-Masse) verwendet wird. Diese hat den Vorteil einer hohen Kaltschlagzähigkeit, die passive Sicherheit des Fahrzeugs wird durch die energieabsorbierenden Eigenschaften dieses Werkstoffes verbessert.

Selbstverständlich ist es auch möglich, die Tragplatte mit anderen Ausformverfahren herzustellen, etwa durch Ausschäumen mit einem Mehrkomponentenschaumbildner; es sind auch Sandwichstrukturen durch mehrere nachfolgende Ausformprozesse realisierbar.

Hierbei ist produktionstechnisch besonders vorteilhaft, wenn der Tragrahmen (welcher ein- oder auch mehrteilig ausgeführt sein kann) komplett in ein Spritz- oder Schaumwerkzeug eingelegt wird zur Ausformung der Tragplatte.

Eine besonders vorteilhafte Weiterbildung sieht vor, daß ein äußerer Rand der zentralen Öffnung des Tragrahmens einen umlaufenden Steg zur form- und stoffschlüssigen Verbindung der Tragplatte mit dem Tragrahmen aufweist. Hierdurch wird eine definierte Verbindung ermöglicht, da die Tragplatte z.B. beidseitig diesen umlaufenden Steg umgreifen kann zur Sicherstellung einer flüssigkeitsdichten und festen Verbindung zwischen Tragplatte und Tragrahmen. Hier ist es besonders einfach, eine flüssigkeitsdichte Tragplatte herzustellen, welche eine zentrale Öffnung des Tragrahmens vollkommen verschließt.

Eine weitere vorteilhafte Weiterbildung sieht vor, daß nach Ausformung der Tragplatte auf der zum Fahrzeuginnenraum gerichteten Seite eine Innenverkleidung und/oder auf der zum Fahrzeugäußeren hinweisenden Seite der Tragplatte eine Außenplanke lösbar oder nicht lösbar befestigt ist. Durch eine lösbare Befestigung wird eine Reparatur der Tür bzw. ihrer auf der Tragplatte angeordneten Elemente sehr erleichtert, da somit beidseitig auf die Tragplatte schnell zugegriffen werden kann. Dies ist außerdem ein Vorteil bei der Wiederverwertung einzelner Komponenten bzw. beim Austausch der Außenbeplankung zur Änderung der Fahrzeugaußenfarbe.

Der erfindungsgemäße Tragrahmen kann verschiedene Formen aufweisen. Zum einen ist er ein- oder mehrteilig herstellbar. Das Rahmenprofil ist mit üblichen Herstellmethoden aus beliebigen Materialien (insbesondere Kunststoffen oder Metallen) herstellbar. So ist z.B. ein Tragrahmen aus Aluminiumdruckguß darstellbar. Eine andere Möglichkeit besteht darin, Stahlbleche zu einer Profilform umzuformen (z.B. Double-Steel-Sheet).

Eine besonders vorteilhafte Weiterbildung sieht vor, daß eine Führungsschiene zur Führung einer gegenüber dem Tragrahmen verschieblichen Fensterscheibe in dem Tragrahmen oder in der Tragplatte vorgesehen ist. Somit ist es nicht mehr notwendig, aufwendig gegenüber dem Rahmen justierbare Extrafensterschienen vorzusehen, die Fehleranfälligkeit sowie Montagezeit wird hierdurch verbessert.

Eine weitere Weiterbildung sieht vor, daß die Tragplatte einen Verstärkungsträger enthält bzw. mit diesem verbunden ist, welcher die Öffnung des Tragrahmens kreuzt. Hierdurch sind nochmals erhöhte Anforderungen an die passive Sicherheit beim Seitenaufprall darstellbar.

Zusammenfassend ist also festzuhalten, daß die Erfindung die Darstellung eines sehr leichten Fahrzeugtürrohbaues und einer sehr leichten Tür insgesamt ermöglicht, bei gleichzeitiger Reduktion der Montagezeiten für die Komponenten und einen signifikanten Kostenvorteil durch die Integration von Bauteilen. Dabei wird gleichzeitig eine saubere Trennung des nassen und trockenen Bereichs der Tür realisiert, was zu einer Qualitätsverbesserung führt. Hauptvorteile sind somit Gewichtsreduktion, Kostenersparnis, Einsparung von Montagezeit, Erhöhung der Qualität.

Weitere vorteilhafte Weiterbildungen der Erfindung werden in den übrigen abhängigen Ansprüchen angegeben.

Die folgende Erfindung wird nun anhand mehrerer Figuren beispielhaft erläutert. Es zeigen:
- Fig. 1: einen Tragrahmen mit einer noch nicht durch eine Tragplatte ausgefüllten Öffnung,
- Fign. 2a bis 2c: verschiedene Ausführungsformen von Profilen von Tragrahmen mit angekoppelten Tragplatten, und
- Fig. 3: eine Explosionszeichnung einer erfindungsgemäßen Kraftfahrzeugtür.

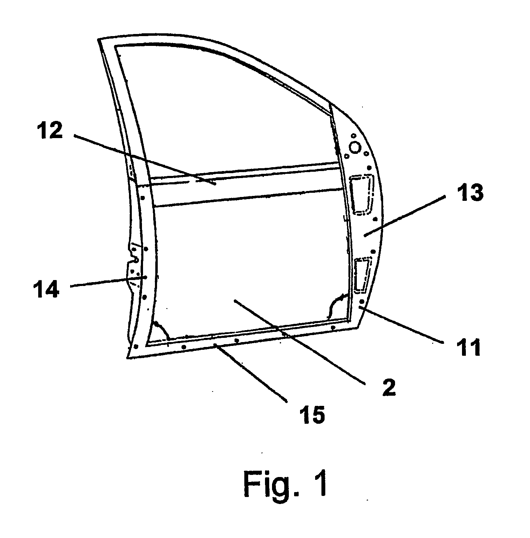

Fig. 1 zeigt einen Tragrahmen 11 für eine Kraftfahrzeugtür. Diese Tür stellt eine rechte Seitentür eines Personenkraftwagens dar, die Tür weist im unteren Abschnitt eine zentrale Öffnung 2 auf, welche nach oben hin durch einen oberen Holm 12, welcher auch eine Fensterbrüstung darstellt für eine darüber liegende Fensterscheibenöffnung begrenzt wird. Der Rahmen 11 kann z.B. als Einzelteile die Seitenteile 13 und 14 sowie die Holme 12 und 15 aufweisen, welche die zentrale Öffnung 2 umranden. Zur Erhöhung der passiven Sicherheit kann vorgesehen werden, daß die zentrale Öffnung 2 durch einen Verstärkungsträger, z.B. aus Metall, gekreuzt wird.

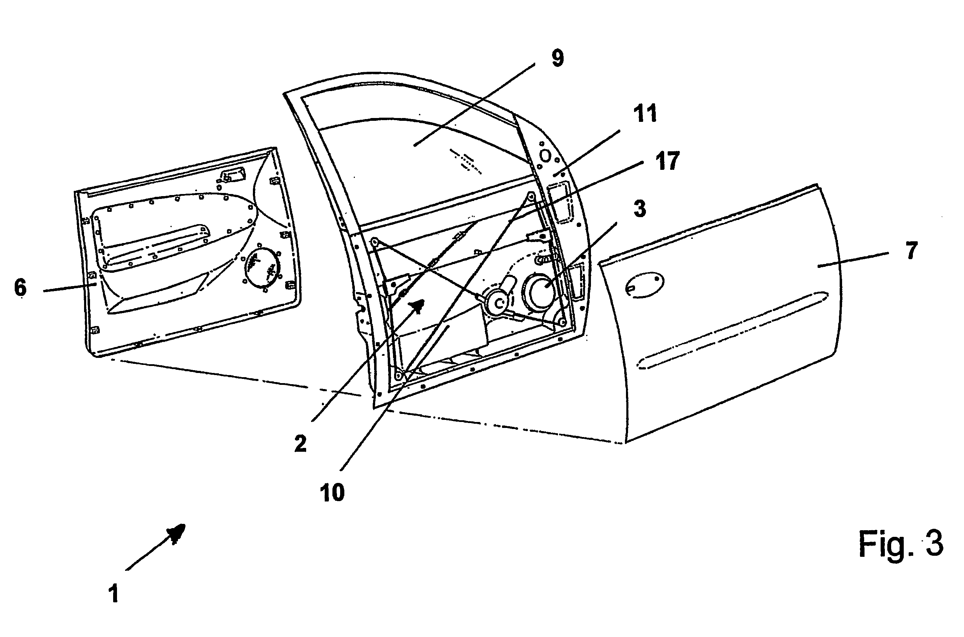

Zur Ausbildung einer erfindungsgemäßen Tragplatte wird der Rahmen 11 in ein Spritzwerkzeug eingelegt. Durch einen in diesem Spritzwerkzeug stattfindenden Ausformvorgang wird die Öffnung 2 durch Ausformung mit einer aushärtbaren Masse unter Bildung einer Tragplatte 10 zur Aufnahme von Elementen wie Fensterhebern, Lautsprechern 3 oder dergleichen zumindest bereichsweise verschlossen. Vorliegend ist die in den Fign. 2a bis 2c und 3 gezeigte Tragplatte aus PPLGF (Polypropylenlangglasfaser-Material). Alternativ sind natürlich sämtliche anderen Stoffe anwendbar, welche aushärtbar sind (beliebige Kunststoffe, Schaumbildnermassen etc., siehe oben). Fig. 2a zeigt einen schematischen Querschnitt durch eine erfindungsgemäße Fahrzeugtür. Hieran wird im Folgenden der Aufbau der Profile des Tragrahmens 11 sowie der Anbindung der Tragplatte 10 erläutert.

In Fig. 2a sind zwei alternative Tragprofilformen gezeigt. Bei der Ausführungsform 8a ist dies ein Aluminium-Druckgußprofil, bei der Ausführungsform 8b ein durch Umformvorgänge aus Stahlblech hergestelltes Hohlprofil (Double-Steel-Sheet). Beide Profile (8a, 8b) haben am Außenrand der Öffnung 2 jeweils einen umlaufenden Steg 5 zur form- und stoffschlüssigen Verbindung der Tragplatte 10 mit dem Tragrahmen 11. Hierdurch wird es möglich, wie in Fign. 2a bis 2c gezeigt, daß durch den Ausformvorgang die Tragplatte 10 den Steg umlaufend umfaßt und somit eine flüssigkeitsdichte Verbindung durch die Tragplatte 10 gegeben ist (vorausgesetzt, daß die Tragplatte 10 die Öffnung 2 vollkommen verschließt). Die in Fig. 2a gezeigte Tür wird in einem Längsschnitt gezeigt (Draufsicht auf eine rechte Pkw-Tür). Auf der dem Fahrzeuginneren zugewandten Seite ist eine Innenverkleidung 6 lösbar an dem Tragrahmen 11 befestigt. Im Zwischenraum zwischen Innenverkleidung 6 und Tragplatte 10 sind Elemente wie Lautsprecher, elektrische Bedienungselemente (z.B. zur Ansteuerung von elektrischen Außenspiegeln etc.) untergebracht. Auf der dem Fahrzeuginnenraum abgewandten Seite der Tragplatte 10 ist eine Außenplanke 7 vorgesehen, welche lösbar am Tragrahmen 11 befestigt ist.

Fign. 2b und 2c zeigen Details von verschiedenen Tragrahmenprofilen. In Fig. 2b ist ein im Wesentlichen dem Profil 8a aus Fig. 2a entsprechendes Beispiel gezeigt, wobei zusätzlich eine Schiene 16 zur Führung einer Fensterscheibe 9 (siehe Fig. 3) im Profil vorgesehen ist. Hierdurch wird die Ausrichtung der Fensterscheibe schneller und genauer realisierbar.

In Fig. 2c ist eine alternative Ausführungsform gezeigt, bei welcher eine Fensterheberschiene Teil der ausgeformten Tragplatte 10 ist. Vorteilhaft hierbei ist (je nach Materialwahl) eine weiter verbesserte Dichtung bzw. geräuscharme Führung der Fensterscheibe 9.

Fig. 3 zeigt eine komplette Kraftfahrzeugtür 1. Auf der dem Kraftfahrzeuginnenraum zugewandten Seite der Kraftfahrzeugtür ist eine Verkleidung 6 lösbar anbringbar. Auf der vom Kraftfahrzeuginnenraum abweisenden Seite der Tür ist eine Außenplanke 7 lösbar befestigt. Die Öffnung 2 des Tragrahmens 11 ist durch die Tragplatte 10 flüssigkeitsdicht verschlossen.

Die Kraftfahrzeugtür 1 ist in Fig. 3 komplett bestückt. D.h., daß z.B. ein Lautsprecher 3 in Fig. 3 rückseitig auf der Tragplatte 10 angebracht ist. Auf der der Außenplanke 7 zugewandten Seite der Tragplatte 10 ist eine gegenüber dem Tragrahmen bewegliche Fensterscheibe 9 verschieblich geführt. Hierzu ist ein Hebemechanismus mit Seilzügen 17 und entsprechenden Umlenkrollen angebracht zur Verschiebung der Scheibe 9 in den Führungsschienen 16 nach Maßgabe eines Kraftfahrzeuginsassen.

Es sei bemerkt, daß der Tragrahmen selbstverständlich auch andere Ausbildungen aufweisen kann als in den Fign. 1 und 3. So ist z.B. eine Unterstützung der Fensterscheibe im oberen B- und C-Säulenbereich nicht immer nötig, d.h. oberhalb des Holms 12 (z.B. bei Coupé-Kraftfahrzeugen).

Insbesondere wesentlich ist die in Anlehnung an Fig. 2c gezeigte Ausführungsform einer Kraftfahrzeugtür. Diese weist einen mit einer Öffnung 2 versehenen Tragrahmen 11 auf, der mit einer Karosseriestruktur des Fahrzeugs (etwa über zwei drehbare Scharniere) beweglich verbunden ist. Die Öffnung 2 wird durch Ausformung mit einer aushärtbaren Massen unter Bildung einer Tragplatte 10 zur Aufnahme von Elementen wie Fensterhebern, Lautsprechern oder dergleichen im Wesentlichen feuchtigkeitsdicht und/oder vollständig verschlossen. Hierbei bietet es sich an, dass der Tragrahmen, welcher z.B. aus Druckgussprofilen bestehen kann, auf seiner Innenseite einen umlaufenden Flansch aufweist, welcher durch die aushärtbare Masse umspritzt wird. Mindestens eine Führungsschiene zur Führung einer gegenüber dem Tragrahmen verschieblichen Fensterscheibe zur Aufnahme einer Seitenkante der Fensterscheibe in der Tragplatte ist vorgesehen. Hierdurch wird es z.B. möglich an zwei Seiten einer Fensterscheibe eine Führungsschiene bereitzustellen, welche integral in einem Spritzwerkzeug beim Umspritzen des Tragrahmens hergestellt wird. Hierdurch verkürzen sich die Herstellungszeiten, wie oben beschrieben wird die Toleranzkette außerdem verkürzt. Zur Verbesserung der Gleiteigenschaft ist es selbstverständlich möglich, in die Schiene 16 ein U-förmiges Element einzubringen, welches gleitarm ist bzw. gleitarm beschichtet ist und somit die Hebelkräfte minimal hält. Dieses U-förmige Element kann entweder gleich mit eingespritzt oder auch nachträglich eingelegt werden.

Das integrale Einspritzen der Führungsschiene ist bei den hier gezeigten Türen mit Tragrahmen besonders vorteilhaft, da (anders als bei Türen mit einem üblichen Blechschichtenaufbau, welche ein fest montiertes Außenblech haben) die Zugänglichkeit und Montierbarkeit sehr gut ist. Aber auch für heutige Kleinwagen mit Tragrahmen-Türen ist mit der Erfindung ein völlig neuer Ansatz gegeben, da bei solchen Fahrzeugen bisher Türmoduleinsätze keine Verwendung fanden. Selbst bei Großserienfahrzeugen findet hier die Trennung von Feucht- und Trockenraum mittels einer auf den Rahmen aufgeklebten Folie statt.

## Patentansprüche

1. Verfahren zur Herstellung einer Kraftfahrzeugtür (1), welche einen mit einer Öffnung (2) versehenen Tragrahmen (11) aufweist, der mit einer Karosseriestruktur des Fahrzeugs beweglich verbunden ist, **dadurch gekennzeichnet, dass** die Öffnung durch Ausformung mit einer aushärtbaren Masse unter Bildung einer Tragplatte (10) zur Aufnahme von Elementen wie Fensterhebern, Lautsprechern (3) oder dergleichen zumindest bereichsweise verschlossen wird.

2. Verfahren nach Anspruch 1, **dadurch gekennzeichnet, dass** diese im wesentlichen feuchtigkeitsdicht verschlossen wird, wobei zumindest eine Führungsschiene zur Führung einer gegenüber dem Tragrahmen verschieblichen Fensterscheibe (9) zur Aufnahme einer Seitenkante der Fensterscheibe in der Tragplatte (Fig. 2c) vorgesehen ist.

3. Verfahren nach einem der vorhergehenden Patentansprüche, **dadurch gekennzeichnet, dass** das Ausformen durch Einspritzen einer thermo- oder duroplastischen Kunststoffmasse (4) geschieht.

4. Verfahren nach einem der vorhergehenden Ansprüche, **dadurch gekennzeichnet, dass** die aushärtbare Masse PPLGF (4) ist.

5. Verfahren nach Anspruch 1 oder 2, **dadurch gekennzeichnet, dass** die Ausformung durch Ausschäumen mit einer Mehrkomponentenschaumbildnermasse geschieht.

6. Verfahren nach einem der vorhergehenden Ansprüche, **dadurch gekennzeichnet, dass** zur Herstellung der Tragplatte (10) der Tragrahmen (11) in ein Spritz- oder Schaumwerkzeug eingelegt wird.

7. Verfahren nach einem der vorhergehenden Ansprüche, **dadurch gekennzeichnet, dass** ein äußerer Rand der Öffnung (2) einen umlaufenden Steg (5) zur form- und stoffschlüssigen Verbindung der Tragplatte (10) mit dem Tragrahmen (11) aufweist.

8. Verfahren nach einem der vorhergehenden Ansprüche, **dadurch gekennzeichnet, dass** die Öffnung (2) beider Herstellung einer flüssigkeitsdichten Tragplatte (10) vollkommen verschlossen wird.

9. Verfahren nach einem der vorhergehenden Ansprüche, **dadurch gekennzeichnet, dass** nach Ausformung der Tragplatte (10) auf der zum Fahrzeuginnenraum gerichteten Seite eine Innenverkleidung (6) und/oder auf der zum Fahrzeugäußeren hinweisenden Seite der Tragplatte (10) eine Außenplanke (7) lösbar oder nicht lösbar befestigt wird.

10. Verfahren nach einem der vorhergehenden Ansprüche, **dadurch gekennzeichet, dass** der Tragrahmen (11) gegossen (8a) oder in einem Umformverfahren (8b) hergestellt ist.

11. Verfahren nach einem der vorhergehenden Ansprüche, **dadurch gekennzeichnet, dass** der Tragrahmen (11) ein- oder mehrteilig ist.

12. Verfahren nach einem der vorhergehenden Ansprüche, **dadurch gekennzeichnet, dass** lediglich eine Öffnung in dem Tragrahmen (11) vorgesehen ist, welche von der Tragplatte (10) verschlossen ist.

13. Verfahren nach Anspruch 12, **dadurch gekennzeichnet**, die Fläche der Öffnung im Verhältnis zur Fläche der von der äußeren Kontur des Tragrahmens eingeschlossene Fläche mehr als 0,4 vorzugsweise mehr als 0,5 beträgt.

14. Fahrzeugtür, hergestellt nach einem der Ansprüche 1 bis 11.

## Claims

1. Method for producing an automotive vehicle door (1), which has a supporting frame (11) provided with an opening (2), said supporting frame being connected movably to a body structure of the vehicle, **characterised in that** the opening is sealed at least in regions by moulding with a curable material whilst forming a supporting plate (10) for receiving elements, such as window winders, loudspeakers (3) or the like.

2. Method according to claim 1, **characterised in that** at least one guide rail for guiding a window pane (9), which is displaceable relative to the supporting frame, being provided in the supporting plate (Fig. 2c) in order to receive a lateral edge of the window pane.

3. Method according to one of the preceding patent claims, **characterised in that** the moulding takes place by injection of a thermoplastic or thermoset plastic material (4).

4. Method according to one of the preceding claims, **characterised in that** the curable material is PPLGF (4).

5. Method according to claim 1 or 2, **characterised in that** the moulding takes place by foaming with a multi-component foaming agent material.

6. Method according to one of the preceding claims, **characterised in that** the supporting frame (11) is inserted in an injection moulding or foaming tool in order to produce the supporting plate (10).

7. Method according to one of the preceding claims, **characterised in that** an outer edge of the opening (2) has a circumferential web (5) for form-fitting and integral connection of the supporting plate (10) to the supporting frame (11).

8. Method according to one of the preceding claims, **characterised in that** the opening (2) is completely sealed when a liquid-proof supporting plate (10) is created.

9. Method according to one of the preceding claims, **characterised in that,** after moulding the supporting plate (10), there is mounted detachably or non-detachably on the side orientated towards the vehicle interior, an interior lining (6) and/or, on the side of the supporting plate (10) pointing towards the vehicle exterior, an external panelling (7).

10. Method according to one of the preceding claims, **characterised in that** the supporting frame (11) is cast (8a) or produced in a shaping method (8b).

11. Method according to one of the preceding claims, **characterised in that** the supporting frame (11) is one part or multi-part.

12. Method according to one of the preceding claims, **characterised in that** merely one opening is provided in the supporting frame (11) which is sealed by the supporting plate (10).

13. Method according to claim 12, **characterised in that** the surface area of the opening, in a ratio to the surface area of the surface area enclosed by the outer contour of the supporting frame, is more than 0.4, preferably more than 0.5.

14. Vehicle door produced according to one of the claims 1 to 11.

## Revendications

1. Procédé de fabrication d'une portière (1) de véhicule automobile, qui comporte un cadre de support (11) pourvu d'une ouverture (2), lui-même relié de façon articulée à une structure de carrosserie du véhicule,
**caractérisé en ce que**
l'ouverture est au moins partiellement obturée par moulage d'une masse durcissante, en formant un panneau de support (10) destiné à recevoir des éléments tels que des lève-vitre, haut-parleurs (3), ou similaires.

2. Procédé selon la revendication 1,
**caractérisé en ce que**
celle-ci est obturée de façon sensiblement étanche à l'humidité, au moins un rail de guidage pour le guidage d'une vitre (9), vitre qui peut être déplacée en coulissement par rapport au cadre de support, destiné à recevoir un bord latéral de la vitre, est prévu dans le panneau de support (Fig. 2c).

3. Procédé selon l'une des revendications précédentes,
**caractérisé en ce que**
le moulage s'effectue par injection d'une masse de matière plastique (4) thermoplastique ou thermodurcissable.

4. Procédé selon l'une des revendications précédentes,
**caractérisé en ce que**
la masse durcissable est du PPLGF (4).

5. Procédé selon les revendications 1 ou 2,
**caractérisé en ce que**
le moulage s'effectue par remplissage avec une masse à agent moussant à plusieurs composants.

6. Procédé selon l'une des revendications précédentes,
**caractérisé en ce que**
pour produire le panneau de support (10), le cadre de support (11) est introduit dans un outillage de moulage par injection ou un outillage de moussage.

7. Procédé selon l'une des revendications précédentes,
**caractérisé en ce que**
un bord extérieur de l'ouverture (2) comporte une nervure périphérique (5) permettant une liaison par couplage des formes et par couplage des matières entre le panneau de support (10) et le cadre de support (11).

8. Procédé selon l'une des revendications précédentes,
**caractérisé en ce que,**
lors de la fabrication d'un panneau de support (10) étanche aux liquides, l'ouverture (2) est entièrement obturée.

9. Procédé selon l'une des revendications précédentes,
**caractérisé en ce que**
après le moulage du panneau de support (10), un habillage intérieur (6) est fixé de façon démontable ou non démontable sur la face tournée vers l'intérieur du véhicule, et/ou un panneau extérieur (7) est fixé de manière démontable ou non démontable sur la face du panneau de support (10), qui est tournée vers l'extérieur du véhicule.

10. Procédé selon l'une des revendications précédentes,
**caractérisé en ce que**
le cadre de support (11) est fabriqué par moulage (8a) ou par un procédé de déformation (8b).

11. Procédé selon l'une des revendications précédentes,
**caractérisé en ce que**
le cadre de support (11) est monobloc ou en plusieurs parties.

12. Procédé selon l'une des revendications précédentes,
**caractérisé en ce que**
seulement une ouverture est prévue dans le cadre de support (11), qui est obturée par le panneau de support (10).

13. Procédé selon la revendication 12,
**caractérisé en ce que**
l'aire de surface de l'ouverture, par rapport à l'aire de surface de l'aire inscrite dans les contours extérieurs du cadre de support, est supérieure à 0,4, de préférence supérieure à 0,5.

14. Portière de véhicule, fabriquée selon l'une des revendications 1 à 11.
